(19) Europäisches Patentamt / European Patent Office / Office européen des brevets

(11) **EP 2 801 235 B1**

(12) **FASCICULE DE BREVET EUROPEEN**

(45) Date de publication et mention
de la délivrance du brevet:
**02.12.2015 Bulletin 2015/49**

(51) Int Cl.:
***H04W 74/08*** *(2009.01)*

(21) Numéro de dépôt: **13700058.4**

(22) Date de dépôt: **02.01.2013**

(86) Numéro de dépôt international:
**PCT/EP2013/050012**

(87) Numéro de publication internationale:
**WO 2013/102628 (11.07.2013 Gazette 2013/28)**

(54) **PROCÉDÉ ET DISPOSITIF D'ACCÈS À UN CANAL DE TRANSMISSION DANS UN RÉSEAU DE COMMUNICATION SANS FIL À FENÊTRE DE CONTENTION**

VERFAHREN UND VORRICHTUNG ZUM ZUGRIFF AUF EINEN ÜBERTRAGUNGSKANAL IN EINEM DRAHTLOSEN KOMMUNIKATIONSNETZWERK MIT EINEM RÜCKHALTEFENSTER

METHOD AND APPARATUS FOR ACCESSING A TRANSMISSION CHANNEL IN A WIRELESS COMMUNICATION NETWORK WITH A CONTENTION WINDOW

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.01.2012 FR 1250014**

(43) Date de publication de la demande:
**12.11.2014 Bulletin 2014/46**

(73) Titulaire: **Commissariat à l'Énergie Atomique et aux Énergies Alternatives 75015 Paris (FR)**

(72) Inventeurs:
• **CORBELLINI, Giorgio**
 **CH-8006 Zürich (CH)**
• **CALVANESE STRINATI, Emilio**
 **F-38000 Grenoble (FR)**

(74) Mandataire: **Regimbeau**
 **20, rue de Chazelles**
 **75847 Paris Cedex 17 (FR)**

(56) Documents cités:
• **SEOK-WON KANG ET AL: "A Novel Estimation-Based Backoff Algorithm in the IEEE 802.11 Based Wireless Network", CONSUMER COMMUNICATIONS AND NETWORKING CONFERENCE (CCNC), 2010 7TH IEEE, IEEE, PISCATAWAY, NJ, USA, 9 janvier 2010 (2010-01-09), pages 1-5, XP031642810, ISBN: 978-1-4244-5175-3**
• **JUN LV ET AL: "A Novel Adaptively Dynamic Tuning of the Contention Window (CW)for Distributed Coordination Function in IEEE 802.11 Ad hoc Networks", CONVERGENCE INFORMATION TECHNOLOGY, 2007. INTERNATIONAL CONFERENCE ON, IEEE, PISCATAWAY, NJ, USA, 21 novembre 2007 (2007-11-21), pages 290-294, XP031225219, ISBN: 978-0-7695-3038-3**
• **POUNTOURAKIS I E ET AL: "Stability and throughput optimization of multichannel slotted non-persistent CSMA protocol", COMPUTER COMMUNICATIONS, ELSEVIER SCIENCE PUBLISHERS BV, AMSTERDAM, NL, vol. 18, no. 12, 1 décembre 1995 (1995-12-01), pages 949-958, XP004032426, ISSN: 0140-3664, DOI: 10.1016/0140-3664(96)81594-5**

## Description

DOMAINE TECHNIQUE GENERAL

L'invention concerne le domaine des réseaux de télécommunication sans fil, en particulier celui des réseaux *ad hoc* du type réseaux de capteurs.

ETAT DE LA TECHNIQUE

Un réseau de capteurs sans fil (en anglais, « *Wireless Sensor Network* ») est un réseau *ad hoc* de communication sans fil composé de noeuds (en anglais « *node* ») qui sont des systèmes émetteur/récepteur sans fil, de faible puissance, capables de transmettre des données vers une station de traitement (en anglais, « *Sink* »).

De tels réseaux ont, ces dernières années, suscité un grand intérêt dans des applications pour lesquelles une collecte de données quel que soit le terrain est nécessaire. Il s'agit par exemple de données permettant le suivi de données relatives à l'environnement, à la surveillance de procédé industriels, à la surveillance préventive, à la surveillance de l'habitat, au contrôle du trafic, les urgences, la surveillance militaire, l'agriculture, le suivi de la faune, etc.

A la différence des réseaux conventionnels et contrairement aux réseaux traditionnels, un réseau de capteurs a son propre design et des contraintes de ressources comme la quantité d'énergie (batterie), la courte portée de communication, le bas débit, le traitement et le stockage limitée au niveau de chaque noeud qui lui son propre.

Dans un tel réseau, chaque noeud souhaite transmettre un paquet de données vers une station de traitement.

La transmission des paquets dans ce type de réseau s'inspire des normes IEEE 801.11, IEEE 802.15.4 et IEEE 802.16.

Dans ces normes, la gestion d'accès des noeuds au canal de transmission peut reposer sur un mode d'accès avec contention au canal de transmission par fenêtre de contention (en anglais, « *Contention Window (CW)* ») comprenant K intervalles de durée ν (en anglais « *slots* »).

Le principe d'un tel accès est le suivant.

Avant d'émettre, le noeud vérifie que le canal de transmission est libre.

Pour ce faire, chaque noeud choisi un instant aléatoire pour l'accès au canal à l'intérieur de la fenêtre de contention (probabilité d'accès avec succès au canal de transmission).

Un but de la gestion d'accès au canal par contention est de faire en sorte qu'à un instant donné, la probabilité qu'un seul noeud émette un paquet de données sur le canal de transmission soit élevée.

Lorsqu'un noeud souhaite émettre un paquet de données sur le canal de transmission, il tire un nombre aléatoire *k* entre 0 et *K* - 1 , qui va servir de compteur à rebours pour l'émission du paquet de requête d'émission (en anglais « *Request To Send* », (RTS)) qui contient l'identifiant des noeuds émetteur et destinataire ainsi que des détails concernant les données à émettre comme la quantité des données et leur type.

Le noeud va alors attendre une durée $k\nu$ (phase d'écoute du canal, « en anglais, « *Channel Sensing* », (CS)) et à l'issue de la durée $k\nu$ si le canal est disponible, c'est-à-dire qu'il n'y a pas un autre noeud qui est en train d'émettre son paquet, il émet son paquet RTS sinon il attend un prochain cycle.

Dans ces normes la taille de la fenêtre est variable et comprise entre deux valeurs $K_{min}$ et $K_{max}$, valeurs fixées par les normes. La taille de la fenêtre de contention est modifiée après chaque transmission. Elle est par exemple doublée entre chaque cycle pour réduire la probabilité de collision entre les paquets issus de noeuds différents.

Une fois que le paquet RTS est reçu par le récepteur, celui-ci peut répondre avec un paquet « d'accord à l'envoi des données » (en anglais en anglais « *Acknowledgement* », (ACK)). Une fois que le paquet ACK est reçu, le noeud émetteur du RTS peut envoyer ses données. Toute de suite après la réception des données, le récepteur peut confirmer la bonne réception avec un nouveau message ACK.

Une telle gestion de l'accès conduit toutefois à un gaspillage des ressources de chaque noeud, notamment les ressources d'énergie.

En effet, le noeud est souvent à l'écoute inutilement (en anglais « *idle listening*»). En outre, chaque fois qu'un noeud reçoit un paquet dont il n'est pas le destinataire il gaspille de l'énergie pour la réception (en anglais «*overhearing*»).

SEOK-WON KANG ET AL: "A Novel Estimation-Based Backoff Algorithm in the IEEE 802.11 Based Wireless Network",CONSUMER COMMUNICATIONS AND NETWORKING CONFERENCE (CCNC), 2010 et JUN LV ET AL: "A Novel Adaptively Dynamic Tuning of the Contention Window (CW) for Distributed Coordination Function in IEEE 802.11 Ad hoc Networks",CONVERGENCE INFORMATION TECHNOLOGY, 2007 décrivent des procédés de régulation d'émission connus.

J Le problème à résoudre est d'organiser l'accès au canal de transmission en manière efficace afin de prolonger la durée de vie du réseau.

PRESENTATION DE L'INVENTION

L'invention vise à pallier au moins l'un des inconvénients précités.

A cet effet l'invention propose un procédé selon la revendication 1.

Et l'invention propose aussi un dispositif selon la revendication 9.

L'invention repose sur le fait que chaque noeud souhaite émettre un paquet de données à l'issue d'une période de contention. Période de contention qui consiste à coupler le principe connu de la fenêtre de contention avec un principe de tours de contention successifs. La période de contention étant de durée fixée par l'application.

Un tel couplage permet d'augmenter la probabilité de succès d'accès au canal de transmission.

En outre, du fait que le nombre de slots de la fenêtre de contention est optimisé en fonction de la densité du réseau, la consommation d'énergie de chaque noeud nécessaire à l'écoute du canal est limitée.

## PRESENTATION DES FIGURES

D'autres caractéristiques et avantages de l'invention ressortiront encore de la description qui suit laquelle est purement illustrative et non limitative et doit être lue en regard des dessins annexés sur lesquels :

- la figure 1 illustre un réseau de communications ;
- la figure 2 illustre un dispositif d'accès au réseau de communication de chaque noeud du réseau ;
- la figure 3 illustre une gestion du trafic par fenêtre de contention selon un mode de réalisation de l'invention ;
- la figure 4 illustre des étapes d'un procédé d'accès au réseau de communication selon l'invention ;
- la figure 5 illustre des étapes d'un procédé conforme à un mode de réalisation de l'invention ;
- la figure 6 illustre des étapes d'un procédé conforme à un mode de réalisation de l'invention ;
- la figure 7 illustre des étapes d'un procédé conforme à un mode de réalisation de l'invention.

## DESCRIPTION DETAILLEE DE L'INVENTION

On se place ici dans le cas d'un réseau de capteurs. Bien entendu le procédé ci-dessous peut s'appliquer à n'importe quel système dans lequel des systèmes émetteur/récepteur souhaitent émettent un paquet de données sur le même canal de transmission.

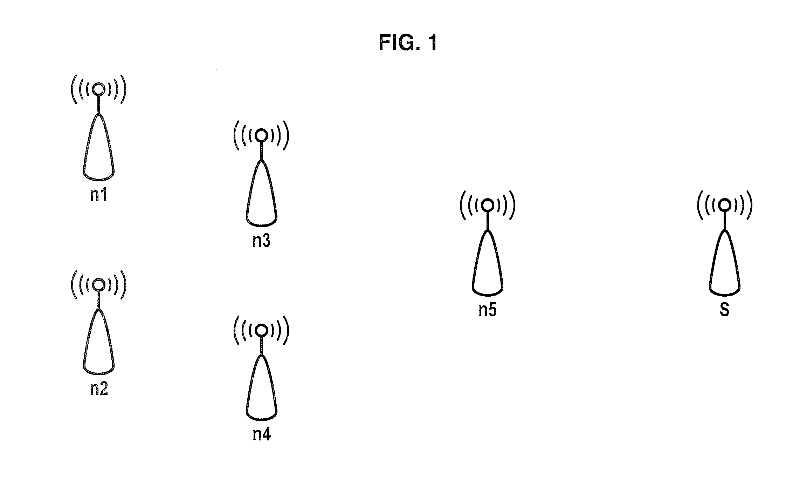

La figure 1 illustre un réseau de N capteur comprenant cinq noeuds n1, n2, n3, n4, n5 et une station de traitement S. Un noeud est système émetteur/récepteur.

Chaque noeud comporte un dispositif d'accès au réseau de communication sans fil dans lequel est implémenté dans un processeur de ce dernier, un procédé d'accès au réseau de communication sans fil.

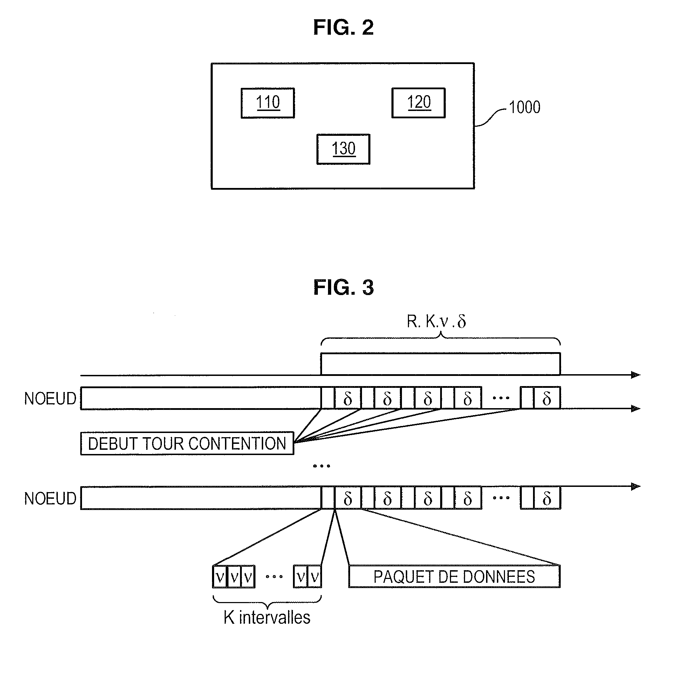

La figure 2 illustre un dispositif 1000 d'accès au réseau de communication. Un tel dispositif comprend un processeur 110, un module 120 d'accès au réseau pour émettre et recevoir des paquets de données et une mémoire 130.

On considère que tous les noeuds souhaitant émettre un paquet de données mettent en oeuvre simultanément, sans interrogation mutuelle, un procédé d'accès au réseau de communication sans fil.

On précise ici que chaque noeud du réseau de communication a la connaissance de la densité du réseau.

Cette densité peut être obtenue par un procédé d'estimation au cours d'une initialisation du réseau de capteurs par exemple ou bien transmise à chaque noeud par l'intermédiaire de la station de traitement. D'autres techniques connues de l'homme du métier pourront être mises en oeuvre à cet effet. Ces techniques ne seront pas détaillées par la suite.

On décrit ce procédé pour un noeud du réseau de communication.

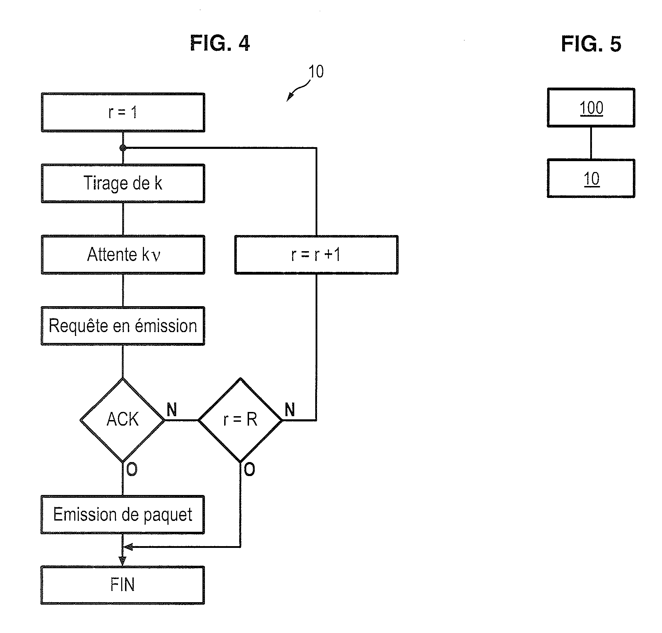

La figure 3 illustre la structure temporelle de plusieurs tours de contention et la figure 4 illustre des étapes d'un procédé d'accès au réseau de communication selon une réalisation de l'invention.

On précise ici que les noeuds du réseau de communication sont synchronisés, c'est-à-dire qu'ils commencent la phase de contention au même moment.

Un noeud du réseau souhaite émettre un paquet de données sur le canal de transmission à destination de la station S de traitement.

Pour ce faire, le noeud dispose d'une période de contention décomposée en $R$ fenêtres de contention $R \geq 1$ consécutives, chaque fenêtre de contention étant décomposée en $K$ intervalles égaux de durée $\vartheta$ suivis d'un intervalle de durée $\delta$, chaque fenêtre de contention correspondant à un tour $r$ de contention. L'intervalle de durée $\delta$ est la durée prévue pour qu'un noeud qui a reçu une autorisation d'émettre un paquet, émette effectivement ce paquet.

En d'autres termes, un noeud souhaitant émettre un paquet de données sur le canal de communication va disposer de cette période de contention pour émettre avec succès son paquet de données. C'est en particulier au cours de cette période qu'un ordonnancement de l'émission des paquets par un ou plusieurs noeuds du réseau va être mise en oeuvre. Il s'agit d'une régulation d'émission d'un paquet de données par un ou plusieurs noeuds du réseau local sans fil via ce réseau local sans fil.

A chaque tour r de contention, le noeud tire un nombre aléatoire compris entre et 0 et $K$ - 1 où $K$ est la taille de la fenêtre de contention en nombre de *slots.*

Le noeud va alors attendre une durée $k. \vartheta$ (où $\vartheta$ est la durée d'un slot) à l'issue de laquelle il va d'abord vérifier que le canal de transmission n'est pas occupé. Pour ce faire il va émettre une requête en transmission (en anglais, « *Request to Send* », (RTS)). S'il reçoit un accusé réception positif ACK (en anglais, « *Acknowledgement* ») il émet le paquet de données. Il dispose d'une durée $\delta$ pour émettre son paquet de données.

En revanche, si le noeud ne reçoit pas d'accusé réception positif il va attendre le tour de contention suivant pour recommencer.

Enfin si le nombre maximal de tours $r = R$ de contention est atteint le noeud peut supposer que le destinataire des RTS n'est pas à portée de communication et il va se mettre en mode attente jusqu'à la prochaine phase de contention.

Un but d'une régulation d'émission est d'optimiser - déterminer - des paramètres de la période de contention. En particulier, il s'agit de déterminer en fonction du nombre N de systèmes émetteurs/récepteurs souhaitant émettre au moins un paquet de données via le réseau local sans fil, le nombre d'intervalles K et le nombre R de fenêtres de contention de la période de contention.

Afin d'optimiser ces paramètres on met en oeuvre une étape 100 de détermination de la taille K de la fenêtre de contention et du nombre R de fenêtres de contention dans la période de contention.

La figure 5 illustre schématiquement des étapes d'une telle optimisation.

La taille K et le nombre R de fenêtres de contention dans la période de contention vont être optimisés en fonction de la densité N du réseau de communication sans fil. En d'autres termes, ces paramètres dépendent du nombre N de noeuds en concurrence pour émettre un paquet de données sur le canal. Il s'agit du nombre de noeuds actifs dans le réseau.

On décrit ci-dessous plusieurs modes de réalisations pour optimiser la taille K de la fenêtre de contention.

On note que selon ces modes de réalisation, la taille de la fenêtre K n'est pas nécessairement la même selon le noeud considéré. En revanche, le nombre R de fenêtres de contention dans la période de contention est identique pour chaque noeud en concurrence.

<u>1<sup>er</sup> mode de réalisation</u>

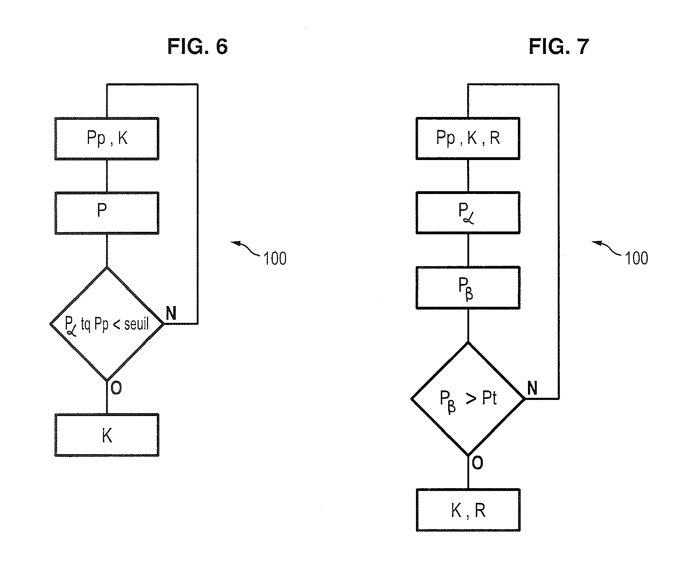

La figure 6 illustre schématiquement des étapes de ce mode de réalisation.

Selon un premier mode de réalisation on a un unique tour de contention unique (c'est-à-dire R=1), dans ce cas seule la taille K de la fenêtre de contention est déterminée.

Une telle détermination dépend de la probabilité $P_p$ de participation de chaque noeud traduisant une autorisation à obtenir une autorisation d'émettre ou non son paquet de données au cours de la période de contention.

Si chaque noeud qui participe à la contention (le nombre total des participants à la contention est N) tire un nombre aléatoire compris entre et 0 et K - 1, la probabilité de transmettre avec succès son RTS au cours d'un tour r de contention est $P_\alpha$ qui est avantageusement définie par la fonctionnelle suivante :

$$P_\alpha = \sum_{k=1}^{K} P_p . N . \frac{k}{K} . \left(1 - \frac{k}{K}\right)^{(N-1).P_p},$$

avec $P_p$ la probabilité de participation.

Selon ce mode de réalisation plusieurs valeurs de probabilité de participation $P_\alpha$ conjointement à la taille K de la fenêtre de contention vont être testées itérativement jusqu'à vérifier la contrainte $P_\alpha$ > *seuil* où la valeur *seuil* est fixée à l'avance.

La valeur *seuil* est fixée par l'application donnée et est typiquement comprise entre 85% et 95%

En d'autres termes, un noeud souhaitant émettre met en oeuvre les étapes suivantes au début de chaque période de contention :

a) définition d'une valeur d'une probabilité de participation $P_p$ avec K donnée ;
c) définition d'une valeur K de la taille de la fenêtre de contention ; détermination de la probabilité $P_\alpha$ ; et
c) répétition des étapes a) - b) jusqu'à ce que $P_\alpha$ > *seuil* avec la valeur seuil fixée à l'avance (par exemple 95%).

<u>2<sup>nd</sup> mode de réalisation</u>

La figure 7 illustre schématiquement des étapes de ce mode de réalisation.

Selon ce mode réalisation on a plusieurs tours de contention ($R \geq 1$), chaque noeud détermine la taille K de la fenêtre de contention conjointement au nombre R de tours de sélection et à la probabilité de participation $P_p$.

Il s'agit de manière itérative de déterminer la taille K en fonction de la probabilité $P_\alpha$ pour chaque tour R. L'objectif est de faire émettre le nombre le plus grand possible des émetteurs et donc de maximiser R. Pour cela chaque noeud calcule $P_\beta$ qui correspond à l'événement : un noeud émet un paquet de données avec succès en R tours de contention, c'est-à-dire à l'issue de la période de contention.

La probabilité $P_\beta$ est avantageusement définie par la fonctionnelle suivante :

$$P_\beta = \sum_{r=1}^{R} P_\alpha (1 - P_\alpha)^{(r-1)},$$

avec $P_\alpha$ défini dans le premier mode de réalisation et R le nombre de tours de contention.

Selon ce mode de réalisation, la détermination de la taille K de la fenêtre consiste à tester de manière itérative plusieurs valeurs de taille K conjointement à plusieurs valeurs de la probabilité de participation $P_p$ et d'un nombre R de tours de contention.

On note que dans ce mode réalisation, les étapes du premier mode de réalisation sont mises en oeuvre.

Les valeurs de la taille K, R et de la probabilité de participation $P_p$ sont celles qui vérifient la contrainte $P_\beta$ > *seuil,* où seuil est définie à l'avance et dépend de l'application

<u>3<sup>ème</sup> mode de réalisation</u>

De manière complémentaire, pour chacun des deux modes de réalisation ci-dessus décrits, les valeurs des différentes probabilités peuvent provenir de tables de correspondance (en anglais, « *Look Up Tables* » (LUT)).

Ces tables de correspondance peuvent être enregistrées dans la mémoire du dispositif d'accès de chaque noeud du réseau de communication ou bien diffusée de manière périodique par la station de traitement S.

## Revendications

1. Procédé de régulation d'émission d'un ensemble de systèmes émetteurs/récepteurs d'un réseau local comprenant N systèmes émetteurs/récepteurs souhaitant émettre au moins un paquet de données via le réseau local sans fil, chaque système émetteur/récepteur souhaitant émettre ledit au moins un paquet de données à l'issue d'une période de contention au cours de laquelle un émetteur/récepteur va être autorisé à émettre ou non son paquet de données, la période de contention étant décomposée en $R$ fenêtres de contention $R \geq 1$ consécutives, chaque fenêtre de contention étant décomposée en $K$ intervalles égaux de durée $\vartheta$ suivis d'un intervalle de durée $\delta$, chaque fenêtre de contention correspondant à un tour $r$ de contention ; le procédé comprenant une étape de détermination (100), en fonction du nombre N de systèmes émetteurs/récepteurs souhaitant émettre au moins un paquet de données via le réseau local sans fil, du nombre d'intervalles $K$ et du nombre $R$ de fenêtres de contention, le procédé étant **caractérisé en ce que** la détermination du nombre d'intervalles $K$ et du nombre $R$ de fenêtre de contention consiste à tester itérativement plusieurs valeurs du nombre d'intervalles $K$ conjointement à une probabilité de participation $P_p$ traduisant une autorisation à obtenir une autorisation d'émettre ou non son paquet de données au cours de la période de contention de la manière suivante :

   a) définition d'une valeur d'une probabilité de participation $P_p$ ;
   b) définition du nombre $K$ d'intervalles de la taille de la fenêtre de contention ;
   c) détermination d'une probabilité de succès $P_\alpha$ fonction du nombre N de noeuds du réseau de communication sans fils souhaitant émettre un paquet de données, de la taille $K$ de la fenêtre de contention et de la probabilité $P_p$ de participation, la probabilité de succès $P_\alpha$ traduisant une émission réussie du paquet de données au cours d'un tour r de contention ;
   d) répétition des étapes a) à c) jusqu'à ce que $P_\alpha > seuil$ avec la valeur seuil fixée à l'avance.

2. Procédé selon la revendication 1, dans lequel la détermination du nombre d'intervalles $K$ et du nombre $R$ de fenêtre de contention consiste à attribuer aux systèmes émetteurs/récepteurs une probabilité $P_p$ de participation traduisant une autorisation à obtenir une autorisation d'émettre ou non son paquet de données au cours de la période de contention.

3. Procédé selon l'une des revendications 1 à 2, dans lequel la taille $K$ de la fenêtre de contention consiste en outre à

   e) déterminer, pour plusieurs valeurs du nombre de tours $R$ de contention, une probabilité $P_\beta$ selon laquelle un émetteur/récepteur va émettre avec succès son paquet de données à l'issue de la période de contention, ladite probabilité $P_\beta$ dépendant de la probabilité $P_\alpha$ obtenue à l'étape d) ;
   f) répétition de l'étape e) jusqu'à obtenir $P_\beta > seuil$, avec la valeur seuil fixée à l'avance

4. Procédé selon la revendication 3, dans lequel la probabilité $P_\beta$ est définie par la fonctionnelle suivante

$$P_{\beta=} \sum_{r=1}^{R} P_\alpha (1 - P_\alpha)^{(r-1)}.$$

5. Procédé selon l'une des revendications 3 à 5 dans lequel la probabilité $P_\alpha$ est définie par la fonctionnelle suivante

$$P_\alpha = \sum_{k=1}^{K} P_p . N . \frac{k}{K} . \left(1 - \frac{k}{K}\right)^{(N-1).P_p}.$$

6. Procédé selon l'une des revendications 1 à 5, dans lequel pour déterminer si un émetteur/récepteur va être autorisé à émettre ou non son paquet de données, chaque émetteur/récepteur à chaque tour de contention :

   a) tire un nombre aléatoire $k$ compris entre 0 *et* $K$ - 1 ;
   b) attend une durée proportionnelle au nombre aléatoire $k$. $\vartheta$ avant de transmettre un requête en émission de données sur le canal ;
   c) reçoit une autorisation d'émettre ou une indication selon laquelle le canal est occupé ;
   d) émet son paquet de données s'il a reçu une autorisation d'émettre ou n'émet pas son paquet de données.

7. Procédé selon l'une des revendications 1 à 6, dans lequel la probabilité de participation $P_p$ provient d'une table de correspondance comprenant plusieurs valeurs de probabilité de participation en fonction de plusieurs valeurs du nombre N de systèmes émetteurs/récepteurs du réseau de communication.

8. Procédé selon l'une des revendications 1 à 7, dans lequel la valeur seuil est comprise entre 85% et 95%.

9. Dispositif d'accès à un réseau de communication sans fil d'un noeud de communication d'un réseau de communication sans fil comprenant des moyens pour mettre en oeuvre un procédé selon l'une des revendications précédentes.

**Patentansprüche**

1. Verfahren zum Regeln des Sendens einer Einheit von Sender-/Empfängersystemen eines lokalen Netzes, das N Sender-/Empfängersysteme umfasst, die mindestens ein Datenpaket über das lokale drahtlose Netz senden wollen, wobei jedes Sender-/Empfängersystem das mindestens eine Datenpaket nach Ablaufen einer Konkurrenzperiode, während der es einem Sende-/Empfänger erlaubt wird, sein Datenpaket zu senden oder nicht, senden will, wobei die Konkurrenzperiode in $R$ aufeinanderfolgende Konkurrenzfenster $R \geq 1$ aufgeschlüsselt ist, wobei jedes Konkurrenzfenster in $K$ gleiche Intervalle mit einer Dauer $\vartheta$ aufgeschlüsselt ist, auf die ein Intervall mit der Dauer $\delta$ folgt, wobei jedes Konkurrenzfenster einer Konkurrenzrunde r entspricht, wobei das Verfahren einen Bestimmungsschritt (100) in Abhängigkeit von der Anzahl N Sender-/Empfängersysteme, die mindestens ein Datenpaket über das lokale drahtlose Netz senden wollen, der Anzahl $K$ Intervalle und der Anzahl $R$ Konkurrenzfenster umfasst, Verfahren **dadurch gekennzeichnet, dass** die Bestimmung der Anzahl Intervalle $K$ und der Anzahl Konkurrenzfenster $R$ darin besteht, iterativ mehrere Werte der Anzahl $K$ Intervalle gemeinsam mit einer Teilnahmewahrscheinlichkeit $P_p$, die eine Genehmigung zum Erzielen einer Sendegenehmigung oder nicht seines Datenpakets im Laufe der Konkurrenzperiode wie folgt darstellt, zu testen:

   a) Definition eines Teilnahmewahrscheinlichkeitswerts $P_p$,
   b) Definition der Anzahl $K$ Intervalle der Größe des Konkurrenzfensters,
   c) Bestimmen einer Erfolgswahrscheinlichkeit $P_\alpha$ in Abhängigkeit von der Anzahl N Knoten des drahtlosen Kommunikationsnetzes, die ein Datenpaket senden wollen, von der Größe $K$ des Konkurrenzfensters und der Beteiligungswahrscheinlichkeit $P_p$, wobei die Erfolgswahrscheinlichkeit $P_\alpha$ ein erfolgreiches Senden des Datenpakets im Laufe einer Konkurrenzrunde $r$ darstellt,
   d) Wiederholung der Schritte a) bis c), bis $P_\alpha$ > *Schwellenwert* mit dem im Voraus festgelegten Schwellenwert.

2. Verfahren nach Anspruch 1, wobei das Bestimmen der Anzahl $K$ Intervalle und der Anzahl $R$ Konkurrenzfenster darin besteht, den Sender-/Empfängersystemen eine Beteiligungswahrscheinlichkeit $P_p$ zuzuordnen, die eine Genehmigung, eine Genehmigung zum Senden oder nicht seines Datenpakets im Laufe der Konkurrenzperiode zu erzielen, darstellt.

3. Verfahren nach einem der Ansprüche 1 bis 2, wobei die Größe $K$ des Konkurrenzfensters außerdem darin besteht,

   e) für mehrere Werte der Anzahl $R$ Konkurrenzrunden eine Wahrscheinlichkeit $P_\beta$ zu bestimmen, gemäß welcher ein Sender/Empfänger sein Datenpaket nach Ablaufen der Konkurrenzperiode erfolgreich senden wird, wobei die Wahrscheinlichkeit $P_\beta$ von der Wahrscheinlichkeit $P_\alpha$, die bei dem Schritt d) erzielt wurde, abhängt,
   f) ausgehend von Schritt e) bis zum Erzielen von $P_\beta$ > *Schwellenwert* zu wiederholen, wobei der Schwellenwert im Voraus festgelegt ist.

4. Verfahren nach Anspruch 3, wobei die Wahrscheinlichkeit $P_\beta$ durch das folgende Funktional definiert ist

$$P_\beta = \Sigma_{r}^{R} =_1 P_\alpha (1 - P_\alpha)^{(r-1)}.$$

5. Verfahren nach einem der Ansprüche 3 bis 5, wobei die Wahrscheinlichkeit $P_\alpha$ durch das folgende Funktional definiert ist

$$P_\alpha = \Sigma_{k}^{K} =_1 P_p . N . \frac{k}{K} . (1 - \frac{k}{K})^{(N-1).P_p}.$$

6. Verfahren nach einem der Ansprüche 1 bis 5, wobei zum Bestimmen, ob es einem Sender/Empfänger gestattet wird, sein Datenpaket zu senden oder nicht, jeder Sender/Empfänger bei jeder Konkurrenzrunde:

   a) eine Zufallszahl $r$ zieht, die zwischen 0 und $K-1$ liegt,
   b) eine Dauer anteilmäßig zur Zufallszahl $k.\vartheta$ wartet, bevor er eine Datensendeanfrage auf den Kanal sendet,
   c) eine Genehmigung zum Senden oder ein Angabe empfängt, gemäß der der Kanal belegt ist,
   d) sein Datenpaket sendet, falls er eine Sendegenehmigung erhalten hat, oder sein Datenpaket nicht sendet.

7. Verfahren nach einem der Ansprüche 1 bis 6, wobei die Beteiligungswahrscheinlichkeit $P_p$ aus einer Entsprechungstabelle stammt, die mehrere Beteiligungswahrscheinlichkeitswerte in Abhängigkeit von mehreren Werten der Anzahl N Sender-/Empfängersysteme des Kommunikationsnetzes umfasst.

8. Verfahren nach einem der Ansprüche 1 bis 7, wobei der Schwellenwert zwischen 85 % und 95 % liegt.

9. Vorrichtung zum Zugang zu einem drahtlosen Kommunikationsnetz eines Kommunikationsknotens eines drahtlosen Kommunikationsnetzes, die Mittel umfasst, um ein Verfahren nach einem der vorhergehenden Ansprüche auszuführen.

**Claims**

1. Method for controlling the transmission of a set of transmitter/receiver systems of a local network comprising N transmitter/receiver systems wishing to transmit at least one data packet via the wireless local network, each transmitter/receiver system wishing to transmit said at least one data packet at the end of a contention period during which a transmitter/receiver will be allowed to transmit or not the data packet, the contention period being split into R consecutive R $\geq$ 1 contention windows, each contention window being split into K intervals of equal duration $\theta$ followed by an interval of duration $\delta$, each contention window corresponding to a round r of contention; the method comprising a step of determining (100), based on the number N of transmitter/receiver systems wishing to transmit at least one data packet via the wireless local network, the number of intervals K and the number R contention windows, the method being **characterised in that** the determining of the number of intervals K and of the number R of contention windows consists in testing iteratively several values of the number of intervals K together with a probability of participation $P_p$ translating an authorisation to obtain authority to transmit or not its data packet during the contention period as follows:

   a) setting a value of a probability of participation $P_p$;
   b) defining number of intervals K of the size of the contention window;
   c) determining a probability of success $P_\alpha$ based on the number N of nodes in the wireless communication network that want to transmit a data packet, the size K of the contention window and the probability of participation $P_p$, with the probability success $P_\alpha$ translating the successful transmission of the data packet during a round r of contention;
   d) repeating steps a) to c) until $P_a$ > threshold with the threshold value set in advance.

2. Method according to claim 1 wherein the determining of the number of intervals K and the number R of contention windows consists in assigning to the transmitter/receiver systems probability of participation $P_p$ translating an authorisation to obtain authorisation to transmit or not its data packet during the contention period.

3. Method according to one of claims 1 to 2 wherein the size K of the contention window further consists in

   e) determining, for several values of the number of rounds R of contention, a probability $P_\beta$ according to which a transmitter/receiver will transmit its data packet successfully at the end of the period of contention, said probability $P_\beta$ depending on the probability $P_\alpha$ obtained in step d);
   f) repeating step e) until $P_\beta$ > threshold, with the threshold value set in advance

4. Method according to claim 3, wherein the probability $P_\beta$ is defined by the following function

$$P_\beta = \sum_{r=1}^{R} P_\alpha (1 - P_\alpha)^{(r-1)},$$

5. Method according to one of claims 3 to 5 wherein the probability $P_\alpha$ is defined according to the following function

$$P_\alpha = \sum_{k=1}^{K} P_p . N . \frac{k}{K} . \left(1 - \frac{k}{K}\right)^{(N-1).P_p},$$

6. Method according to one of claims 1 to 5, wherein in order to determine if a transmitter/receiver will be allowed to transmit or not the data packet, each transmitter/receiver in each round of contention:

   a) draws a random number k between 0 and K - 1;
   b) waits for a period proportional to the random number k.$\theta$ before transmitting a request for data transmission on the channel;
   c) receives authorisation to transmit or an indication that the channel is busy;
   d) delivers its data packet if it has received authorisation to transmit or does not deliver its data packet.

7. Method according to one of claims 1 to 6, wherein the probability of participation $P_p$ comes from a table of correspondence that includes several values of the probability of participation according to several values of the number N of transmitter/receiver systems of the communications network.

8. Method according to claims 1 to 7, wherein the threshold value is between 85% and 95%.

9. Device for accessing a wireless communication network of a communications node of a wireless communications network comprising means for implementing a method according to one of the preceding claims.

FIG. 1

## FIG. 2

## FIG. 3

## FIG. 4

## FIG. 5

EP 2 801 235 B1

**FIG. 6**

Pp , K

P

$P_\alpha$ tq Pp < seuil — N

O

K

100

**FIG. 7**

Pp , K , R

$P_\alpha$

$P_\beta$

$P_\beta$ > Pt — N

O

K , R

100

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **SEOK-WON KANG et al.** A Novel Estimation-Based Backoff Algorithm in the IEEE 802.11 Based Wireless Network. *CONSUMER COMMUNICATIONS AND NETWORKING CONFERENCE (CCNC),* 2010

- **JUN LV et al.** A Novel Adaptively Dynamic Tuning of the Contention Window (CW) for Distributed Coordination Function in IEEE 802.11 Ad hoc Networks. *CONVERGENCE INFORMATION TECHNOLOGY,* 2007